# EUROPÄISCHE PATENTSCHRIFT

(11) **EP 2 722 221 B1**
(45) Veröffentlichungstag und Bekanntmachung des Hinweises auf die Patenterteilung: **15.02.2017**
(21) Anmeldenummer: 12007231.9
(22) Anmeldetag: 19.10.2012
(51) Int. Cl.: B60N 2/02, B60N 2/06, B60N 2/07, B60N 2/42, B60N 2/427

(54) **Sicherheitssystem für einen Fahrzeugsitz**
Safety system for a vehicle seat
Système de sécurité pour un siège de véhicule

(43) Veröffentlichungstag der Anmeldung: 23.04.2014
(73) Patentinhaber: Metalsa Automotive GmbH, 51702 Bergneustadt (DE)
(72) Erfinder: Kern, Alexander, 51597 Morsbach (DE)
(74) Vertreter: Rebbereh, Cornelia

(56) Entgegenhaltungen:
- EP-A1- 2 487 064
- DE-A1-102011 122 384
- DE-C1- 4 415 467

## Beschreibung

Die Erfindung betrifft ein Sicherheitssystem für einen Fahrzeugsitz.

Im Fahrzeugbau, insbesondere im Kfz-Bereich, sind verschiedene Sicherheitssysteme bekannt, bei denen im Falle eines Unfalls oder einer Gefahrensituation ein Antrieb auf eine Fahrzeugkomponente einwirkt, um die Sicherheit für die Fahrzeuginsassen zu erhöhen. Hierunter fallen z. B. Gurtstraffer oder Systeme, die Einstellung oder Position eines Fahrzeugsitzes verändern. Ein besonderes Problem stellen in diesem Zusammenhang Unfälle mit Heckaufprall, z. B. Auffahrunfälle, dar. Hierbei erfährt das Fahrzeug eine plötzliche Beschleunigung nach vorne, was bedeutet, dass die Fahrzeuginsassen relativ zum Fahrzeug eine Beschleunigung nach hinten erfahren. Während der Rücken eines Insassen normalerweise zumindest im unteren Bereich an der Rückenlehne des Sitzes anliegt, befindet sich der Kopf in aller Regel in einem gewissen Abstand von der Kopfstütze. Aus diesem Grund, und aufgrund der höheren Biegsamkeit des Halses im Vergleich zum Rumpf, ist der Halsbereich bei derartigen Unfällen besonders gefährdet. Es kann hierbei, auch wenn der Aufprall nur mit vergleichsweise geringer Geschwindigkeit erfolgt, zu einem so genannten Schleudertrauma kommen, das aus einer Überstreckung der Halswirbelsäule resultiert.

Um die plötzliche Beschleunigung des Kopfes gegenüber dem Fahrzeugsitz, die auch als Whiplash-Effekt bezeichnet wird, zu mildern, sind im Stand der Technik Systeme entwickelt worden, bei denen der Fahrzeugsitz so ausgestaltet ist, dass er in einem solchen Fall im Fahrzeug nach hinten gleitet und gegebenenfalls auch gekippt wird. Diese Systeme zielen allein darauf ab, der auf den Insassen wirkenden Beschleunigungskraft nachzugeben. Ein grundsätzliches Problem hierbei ist allerdings, dass die Wegstrecke, entlang der der Sitz verfahren werden kann, begrenzt ist. Hat der Sitz eine Endposition erreicht, können darüber hinaus einwirkende Beschleunigungskräfte dennoch zu Verletzungen des Insassen führen. Des Weiteren ist es schwierig, hierbei den Zeitpunkt und die Geschwindigkeit der Bewegung des Sitzes auf die tatsächlich einwirkende Beschleunigung abzustimmen.

Aus der DE 44 15 467 C1 ist eine Sicherheitseinrichtung für Fahrzeuge, insbesondere für Kraftwagen, mit einem Fahrzeugsitz bekannt, der relativ zum Aufbau verlagerbar angeordnet ist und bei einem Aufprall des Fahrzeugs gegen die Aufprallrichtung und/oder in Aufprallrichtung zwangsbewegt ist. Um bei einem Frontalaufprall einen bestmöglichen Insassenschutz vor Verletzungen zu erreichen, sind die Fahrzeugsitze in einer ersten Aufprallphase oder bereits vorher um einen ersten Weg nach hinten verlagert, bevor sie unter der Wirkung der Aufprallverzögerung um einen zweiten Weg nach vorne verlagert werden. Die Verlagerbarkeit wird durch eine horizontale Verschiebbarkeit der Fahrzeugsitze gegenüber ihrem Podest erreicht, wozu eine Sitzschienenanordnung vorgesehen ist. Diese umfasst jeweils zwei zueinander parallele Sitzschienen, die an der Unterseite des jeweils zugeordneten Sitzes befestigt sind. In einen seitlichen Hohlquerschnitt der Sitzschienen greifen Gleitsteine, Gleitbolzen oder Rollen ein, die seitlich auskragend von der Oberseite ihres Podestes abstehen. Die Sitze sind in ihrer Ausgangsstellung jeweils von einem Antriebszylinder gehalten, der mittig zwischen den Sitzschienen verlaufend angeordnet ist. Das Stangenende des Antriebszylinders ist an einer Konsole des Podestes und das Zylinderende des Antriebszylinders über einen Querbolzen am Sitz angelenkt. In einem Brennraum des Antriebszylinders ist ein pyrotechnischer Treibsatz angeordnet, mittels dessen die Kolbenstange ausgeschoben und damit die Länge des Antriebszylinders um den ersten Weg vergrößert wird.

Vor diesem Hintergrund ist es Aufgabe der vorliegenden Erfindung, Maßnahmen zum verbesserten Schutz von Insassen eines Fahrzeugs bei einem Heckaufprall vorzuschlagen.

Die Aufgabe wird erfindungsgemäß gelöst durch ein Sicherheitssystem nach Anspruch 1.

Durch die Erfindung wird zum einen ein Sicherheitssystem für einen Fahrzeugsitz zur Verfügung gestellt. Hierbei bezeichnet "Sicherheitssystem" ein System, bei dem in einer Notfallsituation (also bei einem Unfall oder in einer Gefahrensituation) ein Antrieb auf eine Fahrzeugkomponente einwirkt, um die Sicherheit für die Fahrzeuginsassen zu erhöhen. Als Fahrzeuge kommen in diesem Zusammenhang insbesondere Kraftfahrzeuge wie Pkw oder Lkw infrage. Das erfindungsgemäße Sicherheitssystem für einen Fahrzeugsitz umfasst ein Führungselement, das zur verschieblichen Führung an einer Bodenschiene anordenbar ist. Hierbei bezeichnet "Bodenschiene" eine schienenförmige Komponente, die am Fahrzeugboden befestigt ist, und mit der ein Führungselement, das seinerseits mit dem Fahrzeugsitz verbunden ist, derart eingreifen kann, dass der Fahrzeugsitz verschoben werden kann, wobei er durch das Zusammenwirken von Führungselement und Bodenschiene geführt ist. Hierbei können zwischen Führungselement und Bodenschiene ggf. Kugel- oder Rollenlager ausgebildet sein, um die Reibung herabzusetzen. Derartige Systeme sind im Stand der Technik z. B. zur Anpassung der Sitzposition an die Größe des Fahrers bekannt, wobei typischerweise das Führungselement gegenüber der Bodenschiene arretierbar ist, um eine ungewollte Verschiebung des Sitzes zu verhindern. Normalerweise sind pro Fahrzeugsitz zwei Bodenschienen parallel nebeneinander angeordnet, mit denen zwei Führungselemente zusammenwirken. Das Führungselement kann insbesondere einen länglichen, schienenartigen Aufbau haben. Insbesondere in diesem Fall kann das Führungselement auch als "Sitzschiene" oder "Führungsschiene" bezeichnet werden. Im Allgemeinen ist das Führungselement hier durch seine Funktion definiert, nämlich im Zusammenspiel mit einer Bodenschiene eine verschieblich Führung zu gewährleisten.

Das Führungselement umfasst hierbei wenigstens ein Schubelement zur Verbindung mit dem Fahrzeugsitz, ein Arretierungselement, das zur Arretierung gegenüber der Bodenschiene ausgebildet ist, sowie einen zwischen dem Schubelement und dem Arretierungselement wirkenden Antrieb. Das Schubelement kann hierbei in bekannter Weise zur Verbindung mit dem Fahrzeugsitz vorgesehen sein, z. B. kann es Bohrungen aufweisen, durch die Schrauben geführt werden, mittels derer eine Verschraubung mit dem Fahrzeugsitz möglich ist. Die Verbindung muss hierbei nicht direkt mit einer Sitzschale des Fahrzeugsitzes erfolgen, vielmehr wird typischerweise das Schubelement z. B. mit der Mechanik einer Höhenverstellung verbunden sein, die ihrerseits mit der Sitzschale verbunden ist.

Das Arretierungselement ist durch im Stand der Technik bekannte Mittel gegenüber der Bodenschiene arretierbar, um eine vom Insassen eingestellte Sitzposition zu fixieren. Hierbei müssen nicht alle hierzu notwendigen Mittel Teil des Arretierungselementes sein. So kann im einfachsten Fall z. B. eine Bohrung im Arretierungselement mit einer Mehrzahl von Bohrungen in der Bodenschiene korrespondieren, wobei die Arretierung erfolgt, indem ein Arretierstift o. Ä. durch zwei Bohrungen hindurch gesteckt wird. Es ist hierbei vorgesehen, dass - wie bei bekannten Führungselementen - eine Position des Fahrzeugsitzes z. B. entsprechend der Größe des Insassen eingestellt und mittels des Arretierungselements fixiert wird. Es versteht sich hierbei, dass die Arretierung durch Einwirkung eines Insassen lösbar sein sollte.

Im Rahmen der Erfindung können noch weitere Elemente zur Führung des Sitzes dienen. So kann z. B. ein weiteres Element zusätzlich zum Arretierungselement und Schubelement vorhanden sein, das mit dem Schubelement nur indirekt über den Fahrzeugsitz verbunden ist.

Der Antrieb wirkt zwischen dem Schubelement und dem Arretierungselement, d. h. er ist dazu ausgebildet, eine Kraft zwischen den beiden genannten Elementen zu vermitteln. Somit sind die beiden Elemente in der Regel wenigstens indirekt über den Antrieb miteinander verbunden. Der Antrieb kann hierbei neben dem eigentlichen Motor, auf dessen Ausgestaltung später noch eingegangen wird, gegebenenfalls auch Getriebekomponenten, Mittel zur Kraftübertragung usw. umfassen.

Erfindungsgemäß ist das Schubelement mittels des Antriebes gegenüber dem Arretierungselement verschiebbar, um den Fahrzeugsitz nach vorne zu bewegen. Das bedeutet, das Schubelement, an dem in eingebautem Zustand der Fahrzeugsitz befestigt ist, kann mittels des Antriebes gegenüber dem Arretierungselement derart bewegt werden, dass hieraus (in eingebautem Zustand) eine Bewegung des Fahrzeugsitzes nach vorne resultiert. Die Verschiebung findet hierbei bevorzugt nur nach vorne statt, kann aber ggf. auch mit einer (geringfügigen) Verschiebung nach oben oder unten kombiniert sein. Ebenfalls ist es bevorzugt, dass das Schubelement entlang der Bodenschiene verschoben wird.

Durch das erfindungsgemäße Sicherheitssystem kann in einer Notfallsituation (bei einem Unfall oder gegebenenfalls auch in einer über Sensoren erkannten Gefahrensituation) eine Verlagerung des gesamten Sitzes nach vorne erfolgen. Wenn dies durch einen geeigneten Antrieb schnell genug erfolgt (z. B. innerhalb weniger Millisekunden), so verbleibt ein auf dem Sitz befindlicher Insasse aufgrund der Trägheit währenddessen im Wesentlichen in Position, so dass der Sitz von hinten an den Insassen herangerückt wird. Hierdurch wird die gesamte Rückenlehne mit der daran befindlichen Kopfstütze näher an Rücken und Kopf des Insassen gebracht. Somit verkürzt sich bei einem Aufprall von hinten ein möglicher freier Beschleunigungsweg des Kopfes, woraus eine geringere mögliche Überstreckung und somit ein geringeres Verletzungsrisiko resultiert.

Besonders vorteilhaft ist hierbei, dass sich das erfindungsgemäße Sicherheitssystem ohne größere Probleme in bekannte Sitzsysteme integrieren lässt. Insbesondere sind keinerlei Modifikationen im Bereich der Sitzschale oder Rückenlehne notwendig. Das gesamte Führungselement einschließlich des Antriebes lässt sich, wie noch dargestellt wird, hinreichend kompakt ausführen, dass es im Prinzip ohne weitere Modifikationen der angrenzenden Komponenten in ein bestehendes System integriert werden kann.

Es ist hierbei nicht notwendig, dass sowohl das Schubelement als auch das Arretierungselement derart ausgebildet sind, dass eine Führung an bzw. innerhalb der Bodenschiene gegeben ist. Da üblicherweise die beiden Elemente beim Normalbetrieb des Fahrzeuges einen Verbund bilden, ist es für die Führung des Sitzes ausreichend, wenn eines der beiden Elemente in der dargestellten Weise ausgebildet ist. Bevorzugt sind allerdings beide Elemente zur verschieblichen Führung an der Bodenschiene ausgebildet.

Grundsätzlich kann die Verschiebung des Schubelements durch Zug oder Schub erreicht werden. Gemäß einer Ausgestaltung der Erfindung ist der Antrieb dazu eingerichtet, das Schubelement zu schieben. D. h. im eingebauten Zustand befindet sich das Arretierungselement (wenigstens teilweise) hinter dem Schubelement und der Antrieb ist dazu vorgesehen, das Schubelement nach vorne zu drücken. Daneben ist das erfindungsgemäß aber auch denkbar, dass der Antrieb dazu eingerichtet ist, das Schubelement zu ziehen. In jeder der genannten Ausgestaltungen ist es denkbar, dass ein Motor (bzw. Krafterzeuger) des Antriebs am Schubelement oder am Arretierungselement angeordnet ist.

Im Normalbetrieb des Fahrzeuges ist es wünschenswert, dass keinerlei Verschiebung zwischen dem Arretierungselement und dem Schubelement stattfindet. Es sind hierbei Ausführungsformen denkbar, in denen der Antrieb z. B. aufgrund eines inneren Reibungswiderstandes derartige Verschiebungen verhindert, solange er nicht aktiviert wird. Vorteilhaft umfasst allerdings das Führungselement ein zwischen Arretierungselement und Schubelement wirkendes Verriegelungselement. Durch ein solches Verriegelungselement kann die Relativpositionen zwischen Arretierungselement und Schubelement gesichert werden. Ein solches Verriegelungselement ist hierbei lösbar ausgebildet, d. h. es kann entriegelt werden. Die Verriegelung kann hierbei insbesondere durch eine formschlüssige Verbindung erreicht werden, bei der z. B. einen zapfenförmiges Element auf Seiten des Arretierungselements in eine entsprechende Ausnehmung auf Seiten des Schubelements eingreift oder umgekehrt.

Bei Vorhandensein eines Verriegelungselements ist es notwendig, dass dieses zuverlässig entriegelt wird, wenn das Schubelement verschoben werden soll. Dies kann zum einen über eine übergeordnete Steuerung, die auch den Antrieb auslöst, geschehen. Es ist allerdings bevorzugt, dass das Verriegelungselement durch Einwirkung des Antriebs lösbar ist. In diesem Fall wirkt der Antrieb, der auch die Verschiebung des Schubelements bewirkt, direkt oder indirekt derart auf das Verriegelungselement ein, dass dieses gelöst bzw. entriegelt wird. Der Antrieb wirkt hierbei bevorzugt rein mechanisch auf das Verriegelungselement ein. Auf diese Weise kann eine Fehlfunktion des Verriegelungselements weitgehend ausgeschlossen werden. Darüber hinaus lässt sich hierdurch mit einfachen Mitteln der Entriegelungsvorgang zeitlich auf den Verschiebungsvorgang abstimmen.

Der Antrieb kann im Rahmen der Erfindung verschiedenartig funktionieren, z. B. elektrisch, hydraulisch oder pneumatisch. Diese Antriebsformen haben den Vorteil, dass sich die Verschiebung gut kontrollieren lässt, bedingen aber unter Umständen einen relativ hohen Installationsaufwand und lassen sich nur schwer kompakt realisieren, wenn eine hohe Antriebsleistung bzw. schnelle Auslösung erreicht werden soll. Daher umfasst der Antrieb in einer bevorzugten Ausgestaltung der Erfindung einen pyrotechnischen Gasgenerator. Derartige Vorrichtungen sind im Kfz-Bereich z.B. bei Airbags und anderen Sicherheitssystemen bekannt. Im Allgemeinen bezeichnet "pyrotechnischer Gasgenerator" hierbei jede Vorrichtung, in der gezielt eine chemische Reaktion auslösbar ist, die zur Gasentwicklung führt, typischerweise in Form einer Explosion oder eines gezielten Abbrands. In Kombination hiermit können auch Kartuschen mit vorgespanntem Gas verwendete werden, bei denen z. B. ein pyrotechnischer Gasgenerator eine Berstscheibe zerstört und damit den Zustrom von Gas aus der Kartusche zur Antriebseinheit freigibt. Derartige Vorrichtungen sind auch als Hybridgasgeneratoren bekannt. Bei der chemischen Reaktion, die der Funktion des pyrotechnischen Gasgenerators zugrunde liegt, wird extrem schnell Energie freigesetzt und steht für den Antrieb zur Verfügung, was insbesondere bei Unfällen einen entscheidenden Sicherheitsvorteil bedeutet. In jedem Fall impliziert die Verwendung für ein Sicherheitssystem, dass der Antrieb in der Lage sein muss, die vorgesehene Verschiebung, die im Bereich von einigen Zentimetern liegt, innerhalb von deutlich weniger als 1 Sekunde durchzuführen. Insbesondere dann, wenn der Antrieb bei einem Unfall zum Einsatz kommt, sind kurze Verschiebungszeiten von unter 100 Millisekunden, bevorzugt unter 20 Millisekunden, weiter bevorzugt unter 10 Millisekunden, typisch.

In einer bevorzugten Ausgestaltung der Erfindung umfasst der Antrieb eine Antriebskammer sowie ein hierin verschiebbar angeordnetes Kolbenelement, das durch Druckbeaufschlagung antreibbar ist. Die Antriebskammer bildet hierbei einen Hohlraum, der bevorzugt zumindest abschnittsweise einen gleich bleibenden Innenquerschnitt aufweist. Der genannte Innenquerschnitt kann insbesondere kreisförmig sein, aber ggf. auch rechteckig, polygonal, oval usw. Das Kolbenelement kann in diesem Bereich verschoben werden. Der Querschnitt des Kolbenelements ist hierbei bevorzugt auf den Innenquerschnitt der Antriebskammer abgestimmt. Wird ein Gas oder eine Flüssigkeit an einem Ende der Antriebskammer mit Druck beaufschlagt, so wird das Kolbenelement hierdurch angetrieben. Die hierdurch vermittelte Kraft kann durch eine am Kolbenelement angeordnete Stange oder Ähnliches weiterübertragen werden. So kann z. B. ein Gehäuse, in dem die Antriebskammer ausgebildet ist, fest mit dem Schubelement verbunden sein und die Stange kann am Arretierungselement angreifen, um das Schubelement zu verschieben.

Ein solches System mit Antriebskammer und Kolbenelement kann insbesondere mit einem pyrotechnischen Gasgenerator kombiniert werden, wobei der Gasgenerator in bzw. an der Antriebskammer oder zumindest in Verbindung mit dieser angeordnet ist, so dass das Kolbenelement durch den Gasgenerator mit Gasdruck beaufschlagbar ist. Daneben kann das Kolbenelement selbstverständlich auch pneumatisch oder hydraulisch betätigt werden.

Wird diese Ausführungsform mit einem Verriegelungselement kombiniert, ist es bevorzugt, dass das Kolbenelement dazu eingerichtet ist, mittels einer Stange auf das Verriegelungselement einzuwirken. Die Stange dient hierbei dazu, eine auf das Kolbenelement wirkende Kraft zu übertragen. Diese in Richtung der Bewegung des Kolbenelements gerichtete Kraft kann durch geeignete Mittel, z. B. eine Führungsschräge, zur Erzeugung von senkrecht hier zu wirkenden Kräften verwendet werden, z. B. um ein Verriegelungselement aus einer formschlüssigen Verbindungen herauszuziehen bzw. herauszudrücken.

Wenngleich durch das Führungselement des erfindungsgemäßen Sicherheitssystems ein Fahrzeugsitz schnell und effektiv vorwärts bewegt werden kann, um eine verbesserte Stützwirkung für einen Insassen zu erreichen, ist zu bedenken, dass die auf das Fahrzeug bewirkende Beschleunigung bei einem Heckaufprall noch länger andauern kann. Für diesen Fall kann zusätzlich zum Verschieben des Fahrzeugsitzes nach vorne vorgesehen sein, ihn sich anschließend rückwärts bewegen zu lassen, der einwirkenden Kraft folgend. Durch diese Maßnahme, die an sich im Stand der Technik bereits bekannt ist, kann ein Verletzungsrisiko für den Insassen weiter reduziert werden. Es hat sich hierbei allerdings gezeigt, dass die Rückbewegung nicht unkontrolliert, sondern gebremst stattfinden sollte. Aus diesem Grund umfasst der Antrieb vorzugsweise ein Dämpfungselement zur Dämpfung einer Rückbewegung, die einer Vorwärtsbewegung durch den Antrieb entgegengesetzt ist. Der Begriff "Vorwärtsbewegung" bezieht sich hier selbstverständlich auf die normale Einbauposition, in der der Antrieb eine entsprechende Bewegung des Schubelements und somit des Fahrzeugsitzes erzeugt. Bei der oben geschilderten Variante einer Antriebskammer mit Kolbenelement kann bereits das Kolbenelement als Dämpfungselement wirken, da es bei der Rückbewegung in den Antriebskammer ein darin befindliches Gas bzw. eine Flüssigkeit komprimiert bzw. einen Strömungswiderstand ausgesetzt ist. Eine Dämpfung kann allerdings auch z. B. durch Festkörperreibung oder durch eine Wirbelstrombremse erfolgen.

Um zu vermeiden, dass die Verschiebung des Schubelements mittels des Antriebes durch das Dämpfungselement behindert wird, ist es besonders vorteilhaft, wenn dessen Einwirkung sich vornehmlich auf die Rückbewegung beschränkt. Daher vorzugsweise vorgesehen, dass das Dämpfungselement im Bereich des Übergangs zur Rückbewegung aktivierbar ist. Dies beinhaltet sowohl Ausführungsformen, bei denen die Aktivierung gleichzeitig mit dem Übergang zur Rückbewegung stattfindet als auch solche, bei denen die Aktivierung (kurz) davor bzw. danach erfolgt. Als Aktivierung gilt in diesem Zusammenhang jede Veränderung des Dämpfungselements, durch die sich die dämpfende Wirkung desselben verstärkt.

Besonders bevorzugt ist es hierbei, dass das Dämpfungselement durch Einwirkung des Antriebs aktivierbar ist. In diesem Fall entfällt wiederum eine übergeordnete Steuerung zur Aktivierung des Dämpfungselements, die einen zusätzlichen Installationsaufwand sowie gegebenenfalls eine höhere Fehleranfälligkeit mit sich bringen würde. Bei dieser Ausführungsform wird durch die Aktivierung des Antriebs (mit zeitlicher Verzögerung) die Aktivierung des Dämpfungselements ausgelöst. Die Aktivierung erfolgt in diesem Zusammenhang bevorzugt rein mechanisch, z. B. dadurch dass der Antrieb das Dämpfungselement gegen einen feststehenden Anschlag drückt.

Gemäß einer besonders bevorzugten Ausgestaltung ist hierbei das Dämpfungselement am Kolbenelement ausgebildet und weist ein Manschettenelement sowie ein Spreizelement auf. ein solches Manschettenelement kann hierbei insbesondere ringförmig bzw. zylindermantelförmig ausgestaltet sein. In jedem Fall weist es im Inneren eine Ausnehmung auf, in die das Spreizelement eingeschoben werden kann. Letzteres hat vorteilhaft eine sich in Richtung der Einschubbewegung verjüngende Form, so dass beim Einschieben das Manschettenelement eine nach außen gerichtete Kraft erfährt, die das Manschettenelement ausweitet. Hierzu kann das Manschettenelement insbesondere einen oder mehrere Dehnungsschlitze aufweisen oder kann aus einem Material erhöhter Elastizität bestehen. Jedenfalls ist bei dieser Ausgestaltung das Spreizelement dazu eingerichtet, durch Zusammenwirken mit einem Anschlag in das Manschettenelement eingeschoben zu werden, um dieses aufzuweiten. Hierbei ist zum einen denkbar, dass eine Bewegung des Manschettenelements durch den Anschlag gestoppt wird, während sich das Spreizelement weiterbewegt, insbesondere durch den Antrieb angetrieben. Zum anderen ist umgekehrt denkbar, dass das Spreizelement durch den Anschlag gestoppt wird, während sich das Manschettenelement demgegenüber weiterbewegt. Besonders bevorzugt ist hierbei der Außenquerschnitt des Manschettenelements auf den Innenquerschnitt der Antriebskammer abgestimmt, so dass sich vor der Aufweitung keine Festkörperreibung zwischen Manschettenelement und Antriebskammer ergibt, während es nach der Aufweitung zu einer solchen Festkörperreibung kommt. Gegebenenfalls kann das Manschettenelement sogar dazu ausgebildet sein, die Antriebskammer aufzuweiten.

Das erfindungsgemäße Sicherheitssystem kann selbstverständlich auch eine mit einem Fahrzeugboden fest verbindbaren Bodenschiene umfassen, wobei das Führungselement an der Bodenschiene angeordnet und verschieblich geführt ist. Wie bereits erwähnt, können zwischen den genannten Elementen auch Kugel- oder Rollenlager angeordnet sein. Es können auch noch weitere Komponenten Teil des Sicherheitssystems sein, z. B. Sensoren, Steuerkomponenten oder eine Stromversorgung.

Details der Erfindungen werden im Folgenden anhand eines Ausführungsbeispiels mit Bezug auf die Figuren erläutert. Hierbei zeigt
- Fig.1: eine perspektivische Darstellung einer Ausführungsform eines erfindungsgemäßen Sicherheitssystems für einen Fahrzeugsitz in Ruheposition;
- Fig.2: eine Seitenansicht des Sicherheitssystems aus Fig.1;
- Fig.3: eine Seitenansicht aus der Richtung III in Fig.2;
- Fig.4: eine Schnittdarstellung gemäß der Linie IV-IV Fig.2;
- Fig.5: eine vergrößerte Detailansicht von Fig.3;
- Fig.6: eine perspektivische Darstellung eines Kolbenelements sowie eines Verriegelungselements des Sicherheitssystems aus Fig.1.
- Fig.7: eine Seitenansicht des Sicherheitssystems aus Fig.1 in aktivierter Position;
- Fig.8: eine Schnittdarstellung gemäß der Linie VIII-VIII in Fig.7;
- Fig.9: eine Schnittdarstellung gemäß der Linie IX-IX in Fig.8;
- Fig.10: eine vergrößerte Detailansicht von Fig.9; sowie
- Fig.11: eine stark schematisierte Seitenansicht eines Fahrzeugsitzes mit dem Sicherheitssystem aus Fig.1 sowie eines Insassen.

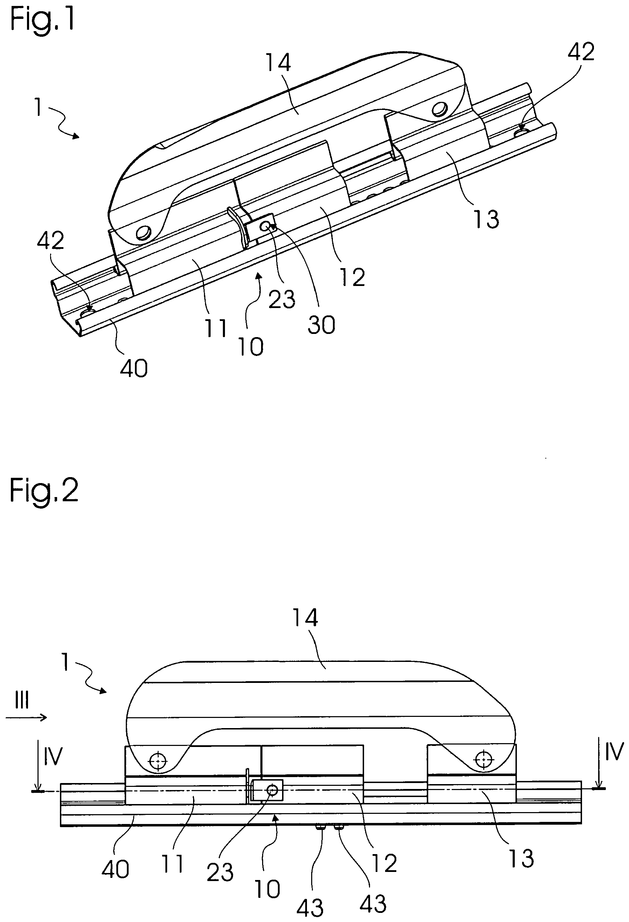

In Fig.1 ist ein erfindungsgemäßes Sicherheitssystem 1 für einen Fahrzeugsitz 50 in perspektivischer Darstellung gezeigt. Das Sicherheitssystem 1 umfasst eine Bodenschiene 40, die zur Befestigung an einem Fahrzeugboden vorgesehen ist. In dieser Bodenschiene 40 sind drei Schienenelemente 11, 12, 13 verschieblich geführt. Hierbei sind ein erstes Schienenelement 11 und ein zweites Schienenelement 12 durch zwei Arretierungsbolzen 23 aneinander gekoppelt und schließen in Längsrichtung der Bodenschiene 40 unmittelbar aneinander an. Ein drittes Schienenelement 13 ist beabstandet vom zweiten Schienenelement 12 angeordnet. Das erste Schienenelement 11 und das dritte Schienenelement 13 sind durch ein Bügelelement 14, das zum Unterbau eines Fahrzeugsitzes 50 gehört, miteinander verbunden. Es versteht sich, dass normalerweise jede der gezeigten Komponenten zweimal, nämlich symmetrisch auf beiden Seiten des Sitzes 50 anzuordnen ist. Aus Gründen der Einfachheit werden hier nur die Komponenten einer Seite gezeigt.

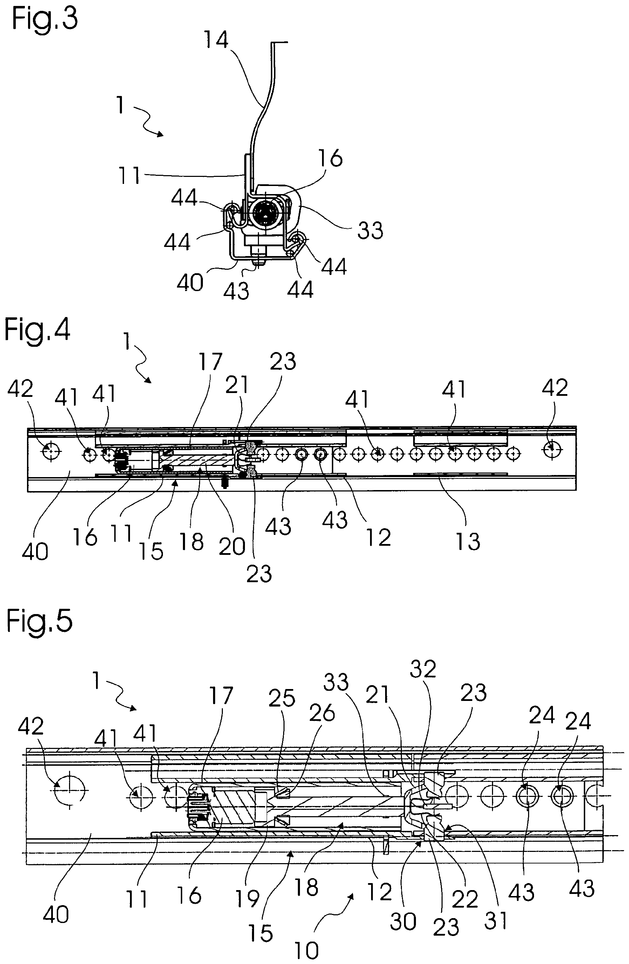

Wie aus der Seitenansicht in Fig.3 ersichtlich ist, sind die Schienenelemente 11, 12,13 mittels Kugellagern und Gleiteinlagen 44 an der Bodenschiene 40 gelagert, um die Reibung zu verringern. Das zweite Schienenelement 12 kann gegenüber der Bodenschiene 40 arretiert werden. Zu diesem Zweck weist, wie insbesondere aus Fig.4 und 5 ersichtlich ist, das zweite Schienenelement 12 Bohrungen 24 auf, die mit einer Reihe von Bohrungen 41 in der Bodenschiene 40 korrespondieren. Zur Arretierung dienen hierbei zwei Arretierstifte 43, die durch jeweils eine Bohrung 24 im zweiten Schienenelement 12 sowie eine Bohrung 41 in der Bodenschiene 40 gesteckt sind. Die Arretierstifte 43 sind durch hier nicht näher gezeigte Mittel entriegelbar und können dann samt deren Halterung zur Verstellung des Sitzes in Längsrichtung verschoben werden.

Die Schnittdarstellungen in Fig. 4 und Fig.5 zeigen, dass innerhalb des ersten Schienenelements 11 ein Antrieb 15 angeordnet ist. Dieser umfasst ein im Wesentlichen zylindrisches Gehäuse 17, in dem eine Antriebskammer 18 ausgebildet ist. Letztere ist in Richtung auf das zweite Schienenelement 12 offen. An einem gegenüberliegenden Ende der Antriebskammer ist ein Mikrogasgenerator 16 angeordnet, der in bekannter Weise über nicht dargestellte Mittel elektrisch gezündet werden kann. Benachbart angeordnet an den Mikrogasgenerator 16 ist ein Kolbenelement 19, das an eine Stange 20 angeformt ist, die sich in etwa bis zum Ende der Antriebskammer 18 erstreckt. Die Anordnung ist derart, dass bei einer Aktivierung des Mikrogasgenerators 16 das Kolbenelement 19 unmittelbar mit Gasdruck beaufschlagt wird. Hierbei ist der Außenquerschnitt des Kolbenelements 19 derart an den Innenquerschnitt der Antriebskammer 18 angepasst, dass sich ein zumindest weitgehend gasdichter Anschluss ergibt.

Angrenzend an das Kolbenelement 19 sind auf der Stange 20 ein Manschettenelement 25 und ein in dieses eingreifendes Spreizelement 26 angeordnet. Das Manschettenelement 25, welches in etwa die Form eines Kegelstumpfsmantels hat, weist hierbei einen ersten Schlitz 27 auf, der eine Aufspreizung erleichtert. Das Spreizelement 26, das in etwa die Form eines Kegelstumpfs hat, weist einen zweiten Schlitz 28 auf, durch den sich das Spreizelement 26 in gewissem Maße aufweiten oder komprimieren lässt.

An einem dem Kolbenelement 19 abgewandten Ende der Stange 20 ist diese fest mit einer Führungsgabel 21 verbunden. Diese weist seitlich zwei Führungsschrägen 34 für die Arretierungsbolzen 23 auf. Zwischen den Arretierungsbolzen 23 ist eine Feder 22 angeordnet, die diese kraftbeaufschlagt und so in Position hält. In dem Bereich, in dem die Arretierungsbolzen 23 in der Ruheposition angeordnet sind, ist das erste Schienenelement 11 wangenartig erweitert, um das zweite Schienenelement 12 von außen zu umgreifen. Das erste Schienenelement 11 und das zweite Schienenelement 12 weisen hierbei jeweils Bohrungen 30, 31 auf, deren Durchmesser dem der Arretierungsbolzen 23 entspricht. In der in Fig.5 dargestellten Ruheposition sind die genannten Schienenelemente 11, 12 mittels der Arretierungsbolzen 23, die durch die Bohrungen 30, 31 gesteckt sind, formschlüssig verbunden.

Wird durch (nicht dargestellte) Sensoren eines Fahrzeugs einen Heckaufprall bzw. das Bevorstehen eines solchen erkannt, so wird der Mikrogasgenerator 16 des Antriebs 15 aktiviert. Dies führt zu einer Druckbeaufschlagung des Kolbenelements 19. Aufgrund der Arretierungsbolzen 23 ist die Lage des ersten Schienenelements 11 gegenüber dem zweiten Schienenelement 12 zunächst gesichert. Allerdings drückt das Kolbenelement 19 über die Stange 20 die Führungsgabel 21 in Richtung auf das zweite Schienenelement 12. Mittels der Führungsschrägen 34 der Führungsgabel 21 werden die Arretierungsbolzen 23 hierbei entgegen der Kraft der Feder 22 nach innen gedrückt und so aus den Bohrungen 30, 31 gelöst. Die Arretierung wird also rein mechanisch durch Einwirkung des Antriebes 15 gelöst.

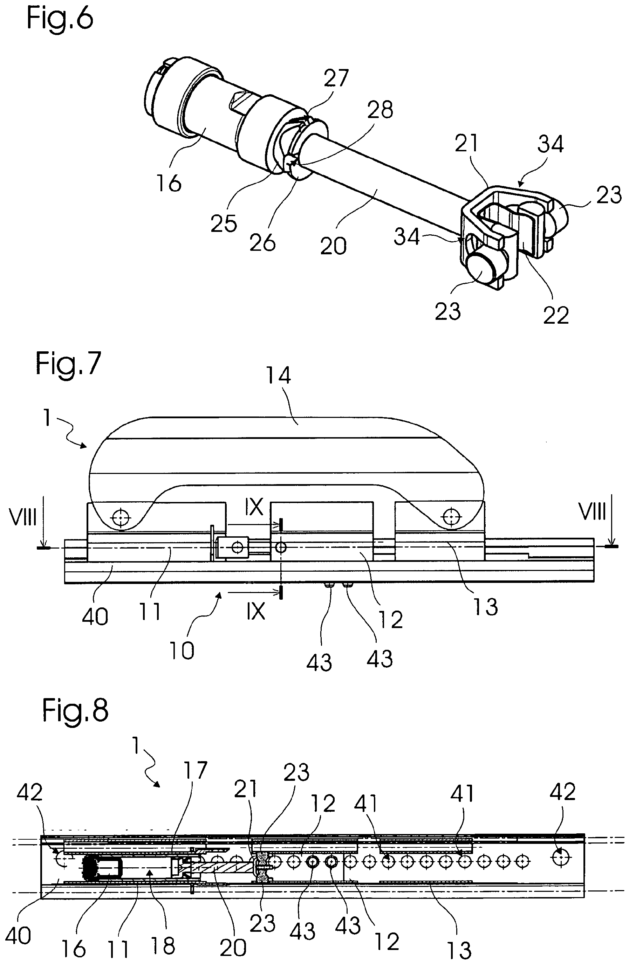

Auf einer kurzen Wegstrecke bewegt sich das System mit Kolbenelement 19 und Stange 20 weiter, bis die Führungsgabel 21 auf einen zentral im zweiten Schienenelement 12 angeordneten ersten Anschlag 32 trifft. Dieser bildet nunmehr ein Widerlager, weshalb die weitere Einwirkung des Antriebs 15 dazu führt, dass das erste Schienenelement 11 vom zweiten Schienenelement 12 weg geschoben wird. In Fig.7-10 ist ein äußerster Punkt der sich hierdurch ergebenden Bewegung dargestellt. Wie in Fig.7 erkennbar, wird das dritte Schienenelement 13 vom ersten Schienenelement 11 aufgrund der Verbindung über das Bügelelement 14 mitgezogen.

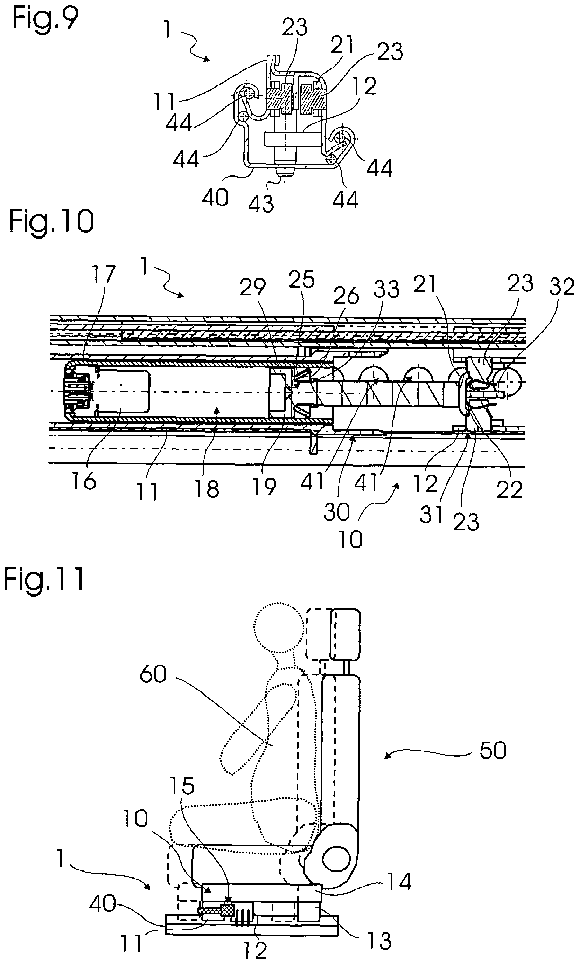

Die Wirkung auf den Fahrzeugsitz 50 ist in Fig. 11 schematisch dargestellt, wobei die durchgezogenen Linien den Sitz 50 sowie das Sicherheitssystem 1 in Ruheposition zeigen, während die gestrichelten Linien den Zustand nach Aktivierung des Antriebs 15 illustrieren. Es resultiert aus der Verschiebung des ersten Schienenelements 11 eine Verlagerung des hiermit verbundenen Fahrzeugsitzes 50. Dessen Rückenlehne wird daher näher an den Rücken eines Insassen 60 gerückt, wodurch sich bei einer plötzlichen Beschleunigung des Fahrzeugs nach vorne, die den Insassen 60 innerhalb des Fahrzeugs rückwärtig beschleunigt, eine bessere Abstützung insbesondere des Kopf- und Halswirbelbereichs ergibt.

Bei der dargestellten Ausführungsform ist keine Arretierung des ersten Schienenelements 11 in der ausgefahrenen Position vorgesehen. Vielmehr soll der Fahrzeugsitz 50 in der Lage sein, der beispielsweise bei einem Heckaufprall auf den Insassen 60 wirkenden Kraft nachzugeben, indem er sich gedämpft rückwärts bewegt. Hierzu bilden das Manschettenelement 25 und das Spreizelement 26 ein Dämpfungselement, das aktiviert wird, wenn sich das erste Schienenelement 11 in der äußersten Position befindet. Hierzu weist das erste Schienenelement 11 einen zweiten Anschlag 33 auf, auf den das Spreizelement 26 bei Erreichen der äußersten Position trifft. Dieser zweite Anschlag 33 stoppt zum einen die Verschiebung des ersten Schienenelements 11, zum anderen wird hierdurch das Spreizelement 26 auf der Stange 20 in das Manschettenelement 25 hinein geschoben. Aufgrund der kegelstumpfartigen, sich erweiternden Form des Spreizelements 26 wird das Manschettenelement 25 hierdurch aufgespreizt. Es wird hierbei von innen gegen die Wandung des Gehäuses 17 gedrückt. Durch die Verschiebung kommt das Spreizelement 26 in Eingriff mit einer ringförmigen Nut 29 der Stange 20, deren axiale Abmessung auf das Spreizelement 26 abgestimmt. Die für das Eingreifen notwendige Kompression des Spreizelements resultiert hierbei aus der vom Manschettenelement 25 ausgeübten Gegenkraft. Zusätzlich kann das Spreizelement 26 vorgespannt sein, um bei Erreichen der Nut 29 einen geringeren Durchmesser anzunehmen.

Bei einer Rückwärtsbewegung des Schienenelements 11 in Richtung auf das zweite Schienenelement 12 werden das Kolbenelement 19 und die Stange 20 zurück in Richtung auf den Mikrogasgenerator 16 gedrückt. Aufgrund der beschriebenen Aufspreizung des Manschettenelementes 25 ergibt sich eine starke Festkörperreibung zwischen dem Manschettenelement 25 und dem Gehäuse 17 der Antriebskammer 18. Darüber hinaus kann es zu einer Aufweitung der Antriebskammer 18 kommen. Diese Effekte führen zu einer Dämpfung der Bewegung, so dass der Fahrzeugsitz 50 mit dem Insassen 60 vergleichsweise sanft zurück in Richtung der Ruheposition geführt wird. Es ergibt sich also insgesamt eine Kombination einer schnellen Vorwärtsbewegung des Sitzes 50, durch die Pläne zur besseren Abstützung nahe an den Insassen 60 gerückt wird und einer gedämpften, langsameren Rückwärtsbewegung des Sitzes 50, durch die einer auf den Insassen 60 wirkenden Kraft nachgegeben wird.

### Bezugszeichenliste

- 1: Sicherheitssystem
- 10: Führungselement
- 11: erstes Schienenelement
- 12: zweites Schienenelement
- 13: drittes Schienenelement
- 14: Bügelelement
- 15: Antrieb
- 16: Mikrogasgenerator
- 17: Gehäuse
- 18: Antriebskammer
- 19: Kolbenelement
- 20: Stange
- 21: Führungsgabel
- 22: Feder
- 23: Arretierungsbolzen
- 24: Bohrung
- 25: Manschettenelement
- 26: Spreizelement
- 27: erster Schlitz
- 28: zweiter Schlitz
- 29: ringförmige Nut
- 30: Bohrung
- 31: Bohrung
- 32: erster Anschlag
- 33: zweiter Anschlag
- 34: Führungsschräge
- 40: Bodenschiene
- 41: Bohrung
- 42: Bohrung
- 43: Arretierstift
- 44: Kugellager, Gleitlager
- 50: Fahrzeugsitz
- 60: Insasse

## Patentansprüche

1. Sicherheitssystem (1) für einen Fahrzeugsitz (50), mit einer als Führungselement (10) ausgebildeten Sitzschiene mit mindestens zwei Schienenelementen (11, 12), welche zur verschieblichen Führung an einer Bodenschiene (40) anordenbar sind und die wenigstens
- ein als Schubelement (11) ausgebildetes Schienenelement zur Verbindung mit dem Fahrzeugsitz (50),
- ein als Arretierungselement (12) ausgebildetes Schienenelement, das zur Arretierung gegenüber der Bodenschiene (40) ausgebildet ist, sowie
- einen zwischen dem Schubelement (11) und dem Arretierungselement (12) wirkenden Antrieb (15)
umfasst, wobei das Schubelement (11) mittels des Antriebs (15) gegenüber dem Arretierungselement (12) verschiebbar ist, um den Fahrzeugsitz nach vorne zu bewegen.

2. Sicherheitssystem nach Anspruch 1, **dadurch gekennzeichnet, dass** sowohl das Schubelement (11) als auch das Arretierungselement (12) zur verschieblichen Führung an der Bodenschiene (40) ausgebildet sind.

3. Sicherheitssystem nach einem der vorherigen Ansprüche, **dadurch gekennzeichnet, dass** der Antrieb (15) dazu eingerichtet ist, dass Schubelement (11) zu schieben.

4. Sicherheitssystem nach einem der vorherigen Ansprüche, **gekennzeichnet durch** ein zwischen Arretierungselement (12) und Schubelement (11) wirkendes Verriegelungselement (21, 22, 23),

5. Sicherheitssystem nach Anspruch 4, **dadurch gekennzeichnet, dass** das Verriegelungselement (21, 22, 23) durch Einwirkung des Antriebs (15) lösbar ist.

6. Sicherheitssystem nach einem der vorherigen Ansprüche, **dadurch gekennzeichnet, dass** der Antrieb (15) einen pyrotechnischen Gasgenerator (16) umfasst.

7. Sicherheitssystem nach einem der vorherigen Ansprüche, **dadurch gekennzeichnet, dass** der Antrieb (15) einen Antriebskammer (18) sowie einen hierin verschiebbar angeordnetes Kolbenelement (19) umfasst, das durch Druckbeaufschlagung antreibbar ist.

8. Sicherheitssystem nach Anspruch 5 und 7, **dadurch gekennzeichnet, dass** das Kolbenelement (19) dazu eingerichtet ist, mittels einer Stange (20) auf das Verriegelungselement (21, 22, 23) einzuwirken.

9. Sicherheitssystem nach einem der vorherigen Ansprüche, **dadurch gekennzeichnet, dass** der Antrieb (15) ein Dämpfungselement (25, 26) zur Dämpfung einer Rückbewegung umfasst, die einer Vorwärtsbewegung durch den Antrieb (15) entgegengesetzt ist.

10. Sicherheitssystem nach Anspruch 9, **dadurch gekennzeichnet, dass** das Dämpfungselement (25, 26) im Bereich des Übergangs zur Rückbewegung aktivierbar ist.

11. Sicherheitssystem nach Anspruch 9 oder 10, **dadurch gekennzeichnet, dass** das Dämpfungselement (25, 26) durch Einwirkung des Antriebs (15) aktivierbar ist.

12. Sicherheitssystem nach einem der Ansprüche 9 bis 11, **dadurch gekennzeichnet, dass** das Dämpfungselement (25, 26) am Kolbenelement (19) ausgebildet ist und
- ein Manschettenelement (25) sowie
- ein Spreizelement (26)
aufweist, wobei das Spreizelement (25, 26) dazu eingerichtet ist, durch Zusammenwirken mit einem Anschlag (32) in das Manschettenelement (25) eingeschoben zu werden, um dieses aufzuweiten.

13. Sicherheitssystem nach einem der vorherigen Ansprüche, **gekennzeichnet durch** eine mit einem Fahrzeugboden fest verbindbare Bodenschiene (40), wobei das Führungselement (10) an der Bodenschiene (40) angeordnet und verschieblich geführt ist.

## Claims

1. A safety system (1) for a vehicle seat (50), having a seat rail which is constructed as a guide element (10) and has at least two rail elements (11, 12) which can be arranged for displaceable guidance on a floor rail (40) and which comprises at least
- one rail element, constructed as a slide element, (11) for connection to the vehicle seat (50),
- one rail element, which is constructed as an arresting element (12) and is designed for an arresting action with respect to the floor rail (40), and
- one drive (15) acting between the slide element (11) and the arresting element (12),
wherein the slide element (11) can be displaced with respect to the arresting element (12) by means of the drive (15) in order to move the vehicle seat forwards.

2. A safety system according to Claim 1, **characterised in that** both the slide element (11) and the arresting element (12) are designed for displaceable guidance on the floor rail (40).

3. A safety system according to one of the preceding claims, **characterised in that** the drive (15) is designed to move the slide element (11).

4. A safety system according to one of the preceding claims, **characterised by** a locking element (21, 22, 23) acting between the arresting element (12) and the slide element (11).

5. A safety system according to Claim 4, **characterised in that** the locking element (21, 22, 23) can be released by operation of the drive (15).

6. A safety system according to one of the preceding claims, **characterised in that** the drive (15) comprises a pyrotechnic gas generator (16).

7. A safety system according to one of the preceding claims, **characterised in that** the drive (15) comprises a drive chamber (18) and a piston element (19) which is displaceably arranged in said drive chamber and can be driven by the application of pressure.

8. A safety system according to Claim 5 and 7, **characterised in that** the piston element (19) is designed to act on the locking element (21, 22, 23) by means of a rod (20).

9. A safety system according to one of the preceding claims, **characterised in that** the drive (15) comprises a damping element (25, 26) for damping a backwards movement which is contrary to a forwards movement by means of the drive (15).

10. A safety system according to Claim 9, **characterised in that** the damping element (25, 26) can be activated in the region of the transition to the backwards movement.

11. A safety system according to Claim 9 or 10, **characterised in that** the damping element (25, 26) can be activated by operation of the drive (15).

12. A safety system according to one of Claims 9 to 11, **characterised in that** the damping element (25, 26) is constructed on the piston element (19) and has
- a sleeve element (25) and
- an expansion element (26),
wherein the expansion element (25, 26) is designed to be inserted into the sleeve element (25) through cooperation with a stop (32) in order to expand said sleeve element.

13. A safety system according to one of the preceding claims, **characterised by** a floor rail (40) which can be fixedly connected to a vehicle floor, wherein the guide element (10) is arranged and displaceably guided on the floor rail (40).

## Revendications

1. Système de sécurité (1) pour un siège de véhicule (50), comprenant un rail d'assise réalisé en tant qu'élément de guidage (10) pourvu au moins de deux éléments de rail (11, 12), qui peuvent être disposés au niveau d'un rail de plancher (40) pour le guidage par coulissement, lequel rail d'assise comprend au moins
- un élément de rail réalisé sous la forme d'un élément de poussée (11), pour être relié au siège de véhicule (50),
- un élément de rail réalisé sous la forme d'un élément d'arrêt (12), lequel est réalisé aux fins de l'arrêt par rapport au rail de plancher (40), ainsi
- qu'un entraînement (15) agissant entre l'élément de poussée (11) et l'élément d'arrêt (12),
dans lequel l'élément de poussée (11) peut être coulissé par rapport à l'élément d'arrêt (12) au moyen de l'entraînement (15) afin de déplacer vers l'avant le siège de véhicule.

2. Système de sécurité selon la revendication 1, **caractérisé en ce qu'**aussi bien l'élément de poussée (11) que l'élément d'arrêt (12) sont réalisés aux fins du guidage par coulissement au niveau rail de plancher (40) .

3. Système de sécurité selon l'une quelconque des revendications précédentes, **caractérisé en ce que** l'entraînement (15) est mis au point afin de pousser l'élément de poussée (11).

4. Système de sécurité selon l'une quelconque des revendications précédentes, **caractérisé par** un élément de verrouillage (21, 22, 23) agissant entre l'élément d'arrêt (12) et l'élément de poussée (11).

5. Système de sécurité selon la revendication 4, **caractérisé en ce que** l'élément de verrouillage (21, 22, 23) peut être déclenché par l'effet de l'entraînement (15).

6. Système de sécurité selon l'une quelconque des revendications précédentes, **caractérisé en ce que** l'entraînement (15) comprend un générateur de gaz (16) pyrotechnique.

7. Système de sécurité selon l'une quelconque des revendications précédentes, **caractérisé en ce que** l'entraînement (15) comprend une chambre d'entraînement (18) ainsi qu'un élément de piston (19) disposé de manière à pouvoir être coulissé dans cette dernière, lequel élément de piston peut être entraîné par l'action exercée par une pression.

8. Système de sécurité selon la revendication 5 et 7, **caractérisé en ce que** l'élément de piston (19) est mis au point afin d'agir sur l'élément de verrouillage (21, 22, 23) au moyen d'une barre (20).

9. Système de sécurité selon l'une quelconque des revendications précédentes, **caractérisé en ce que** l'entraînement (15) comprend un élément d'amortissement (25, 26) pour amortir un déplacement arrière, qui est opposé à un déplacement avant par l'entraînement (15).

10. Système de sécurité selon la revendication 9, **caractérisé en ce que** l'élément d'amortissement (25, 26) peut être activé dans la zone de la transition aux fins du déplacement arrière.

11. Système de sécurité selon la revendication 9 ou 10, **caractérisé en ce que** l'élément d'amortissement (25, 26) peut être activé par l'effet de l'entraînement (15) .

12. Système de sécurité selon l'une quelconque des revendications 9 à 11, **caractérisé en ce que** l'élément d'amortissement (25, 26) est réalisé au niveau de l'élément de piston (19) et présente
- un élément de manchette (25) ainsi
- qu'un élément d'écartement (26),
dans lequel l'élément d'écartement (25, 26) est mis au point afin d'être enfilé dans l'élément de manchette (25) par coopération avec une butée (32) afin d'élargir ce dernier.

13. Système de sécurité selon l'une quelconque des revendications précédentes, **caractérisé par** un rail de plancher (40) pouvant être relié de manière solidaire à un plancher de véhicule, dans lequel l'élément de guidage (10) est disposé et guidé par coulissement au niveau du rail de plancher (40).
